# EUROPEAN PATENT APPLICATION

(11) **EP 4 793 459 A1**
(43) Date of publication of application: **19.08.2026**
(21) Application number: 24875836.9
(22) Date of filing: 10.10.2024
(51) Int. Cl.: E21B 33/13, E21C 41/32, B09B 101/90, B09B 1/00

(54) **METHOD AND SYSTEM FOR AN ENVIRONMENTALLY AND TECHNICALLY CORRECT DECOMMISSIONING OF A SALT ROCK CAVES**

(30) Priority: 13.10.2023 BR 102023021296
(71) Applicant: Petroleo Brasileiro S.A. - PETROBRAS, 20031-912 Rio de Janeiro (BR)
(72) Inventor: POIATE JUNIOR, Edgard, 21941-915 Rio de Janeiro (BR)
(74) Representative: Clarke, Modet y Cía., S.L.
(86) International application number: PCT/BR2024/050469
(87) International publication number: WO 2025/076609

(57) **Abstract**

The present invention finds its field of application among the methods and systems for filling, sealing, and abandoning (decommissioning) a cavern built in salt rock, especially one located in a non-homogeneous salt structure (with the presence of porous/permeable rock layers within the salt layer), or near geological faults, or even one that has experienced a cavern roof collapse, which can occur simultaneously and in an integrated manner with the decommissioning of the facilities at the project site. More particularly, the present invention is used in the decommissioning of civil construction in rock salt production and/or storage sites, by using the dissolution mining process, in which there is a need to fill the cavern by filling with solid material, in which the recycled solid material is generated by comminuting demolition waste from decommissioned civil construction of the project facilities (*in loco*)*,* or from other areas, via mobile recycling plant (triturating/crushing/screening) on its own site or not, in which the larger granulometric wastes (crushed stone) are inserted into the bottom of the SRC and those with the lower granulometry (sand) are inserted at the end of the filling of the SRC to colmate the voids and faults.

## Description

### FIELD OF THE INVENTION

The present invention finds its field of application among the methods and systems for filling, sealing, and abandoning (decommissioning) caverns constructed in salt rock, especially those located in non-homogeneous salt structures (with the presence of porous/permeable rock layers within the salt layer), or near geological faults, or even those that have experienced cavern roof collapse, which can occur simultaneously and in an integrated manner with the decommissioning of the facilities at the project site.

More particularly, the present invention is used in the decommissioning of civil construction in rock salt production and/or storage sites, by using the dissolution mining process, in which there is a need to fill the cavern with solid material, in which the recycled solid material is generated by comminuting demolition waste from decommissioned civil construction of the project facilities (*in loco*), or from other areas, via mobile recycling plant (triturating/crushing/screening) on its own site or not, in which the larger granulometric wastes (crushed stone) are inserted into the bottom of the SRC and those with the lower granulometry (sand) are inserted at the end of the filling of the SRC to colmate the voids and faults.

### BACKGROUNDS OF THE INVENTION

Rock salt, which is a rock composed basically of halite (NaCl), is one of the most versatile raw materials, which is used in the manufacture of chlorine, caustic soda, hydrochloric acid, and sodium bicarbonate. It is also part of the composition of various products in the pharmaceutical, personal hygiene (soap, detergent, and toothpaste), clothing, footwear, and civil construction pipe industries. In addition, it is widely used in the textile, arms, paper, pulp, and glass industries, and in water treatment.

Rock salt can conventionally be extracted in two ways. When the mineral layers are superficial, the rock salt is mined by using machines underground. However, when the layers are deep or vertical, the rock salt is extracted by means of dissolution mining. Thus, it can be said that, in summary: an access shaft is constructed; water is injected; the rock salt is then dissolved and pumped to the surface to a processing plant. However, such processes have advantages over the process of obtaining rock salt by evaporation and purification of seawater, as they have a higher degree of purity and concentration (10 times greater).

It is worth mentioning that the dissolution mining process, which consists of solubilizing or dissolving and removing the chemical constituents of the salt rock by the action of water (fresh or saturated in NaCl), is called leaching [(PEREIRA J. C., Solution Mining Research Institute (SMRI). Research Report RR2012-03. Common Practices - Gas Cavern Site Characterization, Design, Construction, Maintenance, and Operation. 2012)], which forms a void in the host rock, called a Salt Rock Cavern (SRC).

In detail, the process begins with the drilling of one or more access shafts, and the rocks are drilled until reaching the region near the top of the cavern, which will be formed by the leaching process. Then, the drilling string is removed to lower a steel pipe (casing), which will be cemented to provide a seal between the rock layers traversed by the drilling.

Two concentric pipe strings are lowered to near the bottom of the shaft. One is used for water injection and the other for brine return. The innermost string, with a smaller diameter, has a slightly greater length (tens of meters) than the outer string in order to optimize rock salt production.

The rock salt production and the SRC generation begin with the circulation of fresh water or seawater, with the purpose of dissolving the walls of the salt rock. It is important to note that the higher the temperature and flow rate of the injected water, the more efficient the salt dissolution will be. As the injected water becomes saturated, it is replaced by new, unsaturated water. This process of circulating high flow rates of unsaturated water in the salt dissolves large quantities of the same, leaving a large space filled with water, which forms the SRC.

Once the rock salt extraction lifespan of the deposit has ended, due to the intrinsic characteristics of the salt rock such as negligible porosity and permeability and compressive strength similar to concrete (POIATE Jr E. *Mecânica das Rochas e Mecânica Computacional para Projeto de Poços de Petróleo em Zonas de Sal* (Rock Mechanics and Computational Mechanics for the Design of Oil Wells in Salt Zones). Doctoral Thesis, Pontifical Catholic University of Rio de Janeiro, PUC-Rio, December, 2012), the SRC generated by the leaching process can be used to store, for example, compressed air, hydrocarbons, hydrogen, rejects and others (CROTOGINO et al. HUNTORF CAES: More than 20 Years of Successful Operation, Solution Mining Research Institute, Spring Meeting, Orlando, Florida, USA, 2001; U.S. DEPARTMENT OF ENERGY, Strategic Petroleum Reserve Storage Sites. Available at: http://www.fossil.energy.gov/programs/reserves/spr/spr-sites.html; EVANS DJ, CHADWICK RA (EDS). Underground gas storage: Worldwide experiences and future development in the UK and Europe. The Geological Society, London, Special Publication, 313, 93-128. 2009; LORD, A. S. Overview of geological storage of natural gas with emphasis on assessing the feasibility of storing hydrogen. SAND2009-5878. Sandia National Laboratories. 2009; MUNSON et al. Approach to first principles model prediction of measured WIPP (Waste Isolation Pilot Plant) in-situ room closure in salt. Tunneling and Underground Space Technology, 5, 135, 1990; VEIL et al. Disposal of NORM-contaminated oil field wastes in Salt Caverns. United States: N. p., 1998. Web.doi:10.2172/808431).

However, the use of the SRC for storage purposes is only possible if studies have been carried out beforehand and, in addition, it is prudent to verify the dimensions of the SRC, via sonar, to analyze the actual conditions using appropriate global technical standards and recommendations. Otherwise, an abandonment plan for the SRC and the access shaft must be executed, which must: contain risk mitigation actions, provide for the removal of equipment, sealing of the shaft and monitoring of the region to identify the occurrence of subsidence over time.

According to the API-1114 standard (American Petroleum Institute (API). Recommended Practice 1114. Recommended Practice for the design of solution-mined underground storage facilities. Second edition, January 2013), in the state of the art, the abandonment of the SRC at the end of its operating cycle must be carried out in accordance with current regulations. In the absence of regulations, the following procedures may serve as guidance.

First, the stored product must be removed by injecting brine into the cavern, in the case of the SRC that produced rock salt being used for storage. Wellhead equipment and all overhead lines should be removed, if possible.

After removing the equipment and materials, the interior of the production string should be filled in the following positions: place a mechanical plug (bridge plug) near the base of the production string, and a bottom plug on top of the same. The top plug should be positioned approximately 15 m above the salt layer; in zones with a water table, install bottom and top plugs 30 m below the base and 60 m above the top of the layer, respectively; install top and bottom plugs 2 m below the surface and 30 m deep from that level, respectively. The spaces between the cemented zones should be filled with saturated brine or a non-corrosive drilling fluid of acceptable weight.

Finally, install a metal plate over the coating 2 m below the surface, and then backfill.

According to API-1170 (American Petroleum Institute (API). Recommended Practice 1170. Design and Operation of Solution Mined Salt Caverns Used for Natural Gas Storage. First edition, July 2015), there is no industry consensus regarding best practices for abandoning an SRC. Most abandonment attempts consist of processes analogous to those practiced in the hydrocarbon exploration and production industry.

However, some steps that should be taken before abandonment are: removal of the stored gas; if the SRC that produced rock salt is to be used for gas storage, a mechanical integrity test should be performed after the gas removal; removal of hanging strings; inspection of the production string; sonar survey; long-term monitoring program (if the shaft is not sealed). Monitoring of a sealed cavern must include periodic subsidence assessment as well as visual inspection, if there are unexplained changes in the local topography.

According to the recommendations of the Solution Mining Research Institute (SMRI) (PEREIRA, J. C., SMRI. Research Report RR2012-03. Common Practices - Gas Cavern Site Characterization, Design, Construction, Maintenance, and Operation. 2012), the basic concepts for abandoning an SRC that must be met when developing a closure and abandonment plan for the SRC cavern are: offering long-term protection against aquifer contamination and the release of hazardous products to the surface, in the case of an SRC that produced rock salt being used for gas storage; offering long-term stability of the rocks surrounding the cavern; being maintenance-free; allowing the application of methods and materials as much as possible; being accessible; being accepted by the authorities; having replenishment of the stored fluid with brine (preferably) or water; carrying out tests and calculations to estimate the hydraulic, thermal, and mechanical characteristics of the rock *in situ*; waiting until the temperature between the brine and the rock stabilizes as needed (in special cases, it may be necessary to heat the brine to reduce the waiting time); abandoning the cavern (shaft closure activities); and monitoring the surface.

It is also recommended to perform an integrity test on the shoe of the production string before closing the shaft, in order to ensure that there will be no failure through which the stored material could percolate. And all equipment inside the shaft (packer, overhead line, etc.) must be removed before installing the sealing plug. Further, the proper shaft cleaning must be carried out.

As for the final position of the sealing plug, three options are recommended: at the base of the production string, provided that the integrity and impermeability of this zone is guaranteed; in the uncased region between the production string shoe and the cavern roof, provided that this zone has adequate length and cross-section to allow the installation of the packer. The plug is installed above the packer, in a window milled opening. However, regardless of the section chosen for the installation of the final plug, the section above the same must be completely cemented.

The long-term stability must be validated through a surface movement monitoring, in order to verify the occurrence of subsidence in the region. This period can be on the order of 20 to 30 years for brine production caverns.

According to the British Geological Survey (BGS) standard, Open Report Or/07023, An Appraisal of Underground Gas Storage Technologies and Incidents for the Development of Risk Assessment Methodology (2007), in the state of the art, before the abandonment of the SRC, studies must be carried out in order to define strategies for decommissioning, abandonment and mitigation of risks involved in this step. It is known that, over time, the pressure inside the cavern will change. Because of this, an analysis/modeling must be done in order to predict this variation and mitigate the risks arising from the same. Five possible reasons for a change in cavern pressure are: creep of the salt rock; thermal expansion of the fluid in the cavern (in some cases, this may be more critical than salt creep); fluid loss through porous media (salt interface with another type of material); leakage along the shaft; further dissolution and precipitation of salt in the cavern.

According to the British Standards Institute (BSI) standard, BS EN 1918-3:2016, Gas infrastructure - Underground gas storage - part 3: Functional recommendations for storage in solution-mined salt caverns. 2016), in the state of the art, for the abandonment of the SRC at the end of its operating cycle, studies and measurements must be carried out to verify the safety of the site after the SRC is abandoned. A specific decommissioning plan must be drawn up. Plugs are installed in the shaft to ensure the mechanical stability of the salt formation and to maintain the seal between the cavern and the surface. Long-term simulations of evaporite rock creep and the resulting pressures at the base of the casing must be conducted to demonstrate the structural stability of the cavern to be abandoned. The decommissioning of the SRC includes: the removal of gas from the cavern, in the case of the SRC that produced rock salt being used for gas storage; flooding the cavern with water or brine, waiting for the temperature to stabilize before closing the shaft (this process can take several years); monitoring the cavern; installing plugs and abandoning the shaft; decommissioning surface facilities; and monitoring.

Crotogino and Kepplinger (2006) (Crotogino F and Kepplinger J. Cavern well abandonment techniques guidelines manual. SMRI. 2006), summarize several basic R&D projects conducted by the Solution Mining Research Institute (SMRI) on crucial aspects of SRC sealing and abandonment, called Cavern Sealing and Abandonment (CSA), which became the basis for the development of the general manual for planning and implementing this activity.

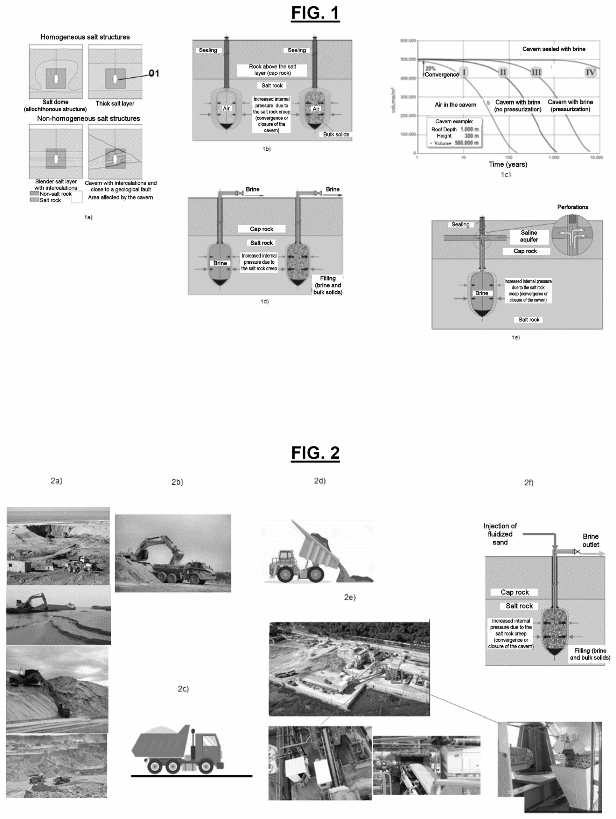

In the state of the art, with the abandonment of the SRC at the end of its operating cycle, it is possible to permanently seal a brine-filled SRC in homogeneous salt structures, such as domes and thick salt layers (Figure 1a), where the stability and integrity are ensured almost exclusively by the salt rock. In these cases, provided the specific site conditions are met, an uncontrolled brine expulsion is not expected to occur in the cap rock, in potable water aquifers, or on the surface.

As a logical first step towards the development of CSA procedures for specific SRCs, this concept must meet the following requirements: long-term protection against contamination of potable water aquifers and the escape of brine and/or the escape of flammable and/or hazardous products into the environment (product residues on the surface), in the case of the SRC that produced rock salt being used for hydrocarbon or other product storage; long-term stability of the rock mass surrounding the cavern; absence of maintenance requirements; application of tested and proven methods and materials, as far as possible; accessibility; and acceptance by the authorities.

The following steps are necessary: assessment of the pre-sealing conditions of SRC access shafts; replacement of the storage fluid with brine or water, in the case of the SRC that produced rock salt being used for hydrocarbon or other product storage; assessment of the minimum waiting time for pressure and temperature stabilization before plugging the SRC; defining and executing the plugging; and monitoring parameters.

In the first phase of development, the authors resorted to analyzing existing experience and regulations for oil and gas wells, with the aim of integrating this experience whenever possible into the CSA concept for SRC, then they analyzed existing regulations for SRC (Germany, United States, Netherlands, Poland).

Specifically, regarding the sealing of the SRC, with cement abandonment plugs to ensure long-term sealing, given the relatively shallow depths of most SRCs, compared to oil and gas wells, means that continuous cementing of the last shoe of the SRC access shaft to the surface has technical and cost advantages compared to alternating cement plugs. Such a procedure should occur after the temperature equalization between the brine present in the SRC and the surrounding rock. And finally, remove the wellhead from the SRC access, place a concrete slab, identify and monitor the surface conditions, such as subsidence.

According to the Política Nacional de Resíduos Sólidos (National Solid Waste Policy) (PNRS), Law No. 12,305, of August 2nd, 2010, waste is the correct term to designate something that has been discarded, that is no longer useful, and its classification is made according to its origin and hazardousness. However, waste is understood to be something that becomes useful in another production process, such as raw material in the industry, by means of recycling. The term reject was created to designate something that cannot be reused, recycled or composted. Therefore, rejects are understood to be the solid waste that, after all possibilities of treatment and recovery by available and economically viable technological processes have been exhausted, presents no other possibility than environmentally adequate final disposal.

According to ABNT Standard NBR 10.004/04, the classification of waste in Brazil is determined by aspects that take into account the potential risks to the environment and public health that the waste may cause. The waste classification involves identifying the process or activity that generated the same, as well as its constituents and characteristics, and comparing these constituents with the list of wastes and substances whose impact on health and the environment is known. In ABNT NBR 1004/04, waste is classified based on the characteristics of hazardous, inert, and non-inert waste: Class I Wastes - Hazardous, are those that present hazardousness and characteristics such as flammability, corrosiveness, reactivity, toxicity, and pathogenicity; Class II A Wastes - Non-Inert, are those that do not fall under the classifications of Class I - Hazardous wastes or Class II B Wastes - Inert; therefore, they may have properties such as biodegradability, combustibility, or water solubility; Class II B Wastes - Inert, are any wastes that, when sampled in a representative manner and subjected to a dynamic and static contact with distilled or deionized water at room temperature, do not have any of their constituents solubilized in concentrations exceeding potability standards for water, except for appearance, color, turbidity, hardness, and taste. It is worth noting that ABNT NBR 10004 does not address to radioactive waste, as this falls under the exclusive jurisdiction of the *Comissão Nacional de Energia Nuclear* (National Nuclear Energy Commission).

According to Resolution No. 307/2002 of the *Conselho Nacional do Meio Ambiente* (National Environment Council) (CONAMA), which establishes guidelines, criteria and procedures for the management of Construction and Demolition Waste (C&D waste), C&D wastes are classified (Article 3^{rd}) as follows: I - Class A, wastes that are reusable or recyclable as aggregates, such as: a) from construction, demolition, renovations and repairs of paving and other infrastructure works, including soils from earthmoving; b) from construction, demolition, renovations and repairs of buildings: ceramic components (bricks, blocks, tiles, cladding panels, etc.), mortar and concrete; c) from the manufacturing and/or demolition process of precast concrete parts (blocks, pipes, curbs, etc.) produced on construction sites; II - Class B, wastes that are recyclable for other purposes, such as: plastics, paper, cardboard, metals, glass, wood and plaster; III - Class C, are wastes for which no economically viable technologies or applications have been developed that allow for their recycling or recovery; IV - Class D, are hazardous wastes from the construction process, such as paints, solvents, oils and others, or those contaminated or harmful to health from demolitions, renovations and repairs of radiological clinics, industrial facilities and others, as well as tiles and other objects and materials containing asbestos or other products harmful to health.

### STATE OF THE ART

Some documents from the current state of the art have already addressed the problem of decommissioning caverns in salt rock (SRC), as will be presented below:
The document from the Brazilian Mining Institute, "Guia para Planejamento do Fechamento de Mina" ("Guide for Mine Closure Planning"), Brasília, 2013, presents a post-mining legacy vision and addresses to socioeconomic and environmental issues regarding knowledge on the subject of mine closure. It contains a series of general recommendations, in a guiding way, presenting a view closer to the reality of mining in the Country, with situations and practical cases focused on Brazilian characteristics and peculiarities, in managing mineral development, concerning the mine closure step, in order to contribute to long-term sustainable development in the regions where the mining activity is located.

However, the aforementioned document reports that "access to the underground excavations was obstructed with demolition waste from surface facilities." In other words, such a procedure of simply blocking access (at the entrance) to the mine excavations is equivalent to the state of the art of abandoning SRC in a homogeneous salt structure (in diapir or thick layer), which is analogous to those practiced in the hydrocarbon exploration & production industry for well abandonment, by using a sealing plug only at the access (entrance) of the well. Accordingly, all galleries and mining panels are left without filling material (they are left only with air), which can cause compaction in this region and consequently subsidence of the floor on the surface, especially with an SRC.

It is worth mentioning that blocking access to underground excavations with demolition waste from the surface facilities does not seal access (it is not a hydro-chemical-mechanical-biological barrier), as it is only a partial mechanical obstruction to the entry of animals and people; accordingly, fluids can pass (from outside to inside) and flood the galleries and panels. If this procedure occurs during the abandonment of the SRC, during the closure of the SRC, due to the creep process, the pressure in the fluid inside the cavern increases (pressure build-up), causing this fluid to percolate (from inside to outside the SRC) through the entrance, since it was only obstructed with demolition waste (without mentioning class, granulometry, filling sequence, etc.) and was not sealed. As a result, the integrity of the SRC may be compromised, which can cause a significant subsidence of the surface floor (formation of a subsidence basin), being detrimental to any civil/mechanical construction and even to nature, such as the diversion of river courses and roads, and damage to structures. And, over time, the closure of the SRC may collapse the roof of the SRC and even generate a hole in the surface (sink hole). Furthermore, it will previously cause environmental problems due to the leakage of fluid from the SRC through the access only obstructed with demolition waste from the surface facilities.

The paper "*Descomissionamento e abandono permanente de poços contextualização do cenário nacional*" ("Decommissioning and permanent abandonment of wells: contextualization of the national scenario") (Castro et al, 2021, presented at the IV CONEPETRO - Congresso Nacional de Engenharia de Petróleo, Gás Natural e Biocombustíveis (National Congress of Oil, Natural Gas and Biofuels Engineering) presents, in general terms, the general characteristics of permanent well abandonment projects (deactivation of the hydrocarbon production unit), in addition to presenting the main international abandonment standards, aiming to establish a parallel assessment of the situation and future perspectives of such practices in Brazil, as well as their temporal and economic contextualization. It subsequently describes the so-called solidarity sets of barriers and the main causes of problems arising from an inadequate abandonment, which can cause environmental damage. Finally, it makes a quantitative assessment of the abandonment projects currently in force in Brazil and possible investments during the coming years.

The paper "Post-mining Use of Underground Space For Waste Storage" (Dinis da Gama C, Paper presented at the 7th ISRM Congress, Aachen, Germany, September 1991. Paper Number: ISRM-7CONGRESS-1991-017) portrays the storage of rejects (of the urban, industrial, toxic and radioactive type), and not of waste (material that can be recycled and/or reused), in a definitive way (long-term), in abandoned underground mines, or in decommissioning, as a means of additional monetization for the mining industry, as well as a reliable environmental solution. In addition, it also cites the advantages of using underground space, such as: a) the temperature is approximately constant underground, which is advantageous for a range of stored products, b) the humidity is easily controlled and groundwater quality can be preserved without difficulty; c) the safety is excellent, whether against fires, floods, hurricanes, heavy rains and snow, etc.; d) the proliferation of insects and bacteria is much better preserved than in conventional warehouses; e) material losses and product deterioration are considerably reduced; f) the soil surface is free from solids, liquids and gaseous pollution, as well as deforestation and damage to the landscape.

However, underground mines with the presence of geological faults and/or sediments with high permeability and/or with roof collapse and/or in an area with seismicity, would require adaptations so that the rejects do not move (through fractures and faults or permeable sediments) and contaminate the groundwater. Accordingly, it would be better (safer and cheaper) to design, build, and operate a dedicated underground repository for the permanent storage of waste (radioactive and/or toxic) in a favorable and watertight geological location and setting, without the presence of geological faults (fractures) and/or without sediments with high permeability and/or without roof collapse, as was done at the Yucca Mountain repository (Nevada/USA) and the Waste Isolation Plant Pilot (New Mexico/USA), which include mine access for monitoring and maintenance of the repository, as well as multiple protective barriers against leakage of the stored product.

The paper "Design and Management of Salt Solution Caverns for Toxic Waste Disposal" (Davison et al, 1997, Petroleum Society of CIM, paper No. 97-151) describes a safe, practical, and economically viable alternative for managing low-level radioactive rejects and toxic industrial rejects, through the disposal of such rejects in an underground cavern in salt rock (Solution Cavern Disposal - SCD), as it ensures the isolation of the wastes over time, thus being a means of permanent environmental safety, as well as being more economical than other practices, such as, for example, landfill, chemical treatment, incineration, etc. Issues related to the desirable features of an ideal waste repository are also presented, such as: 1. low probability of negative interaction with the biosphere; 2. the waste elimination technology should be relatively straightforward, economical, and flexible in its ability to handle the rejects; 3. any approach to permanent disposal management of rejects must lead to the society acceptance through a clear understanding of all process aspects; 4. the procedures for transporting, handling, and disposing of the rejects must be safe, meeting the requirements of health and occupational safety agencies, as well as the concerns of impacted communities; 5. the repository sites must be permanent, not impairing current and future use of the earth surface, and must not require permanent post-maintenance or treatments for any significant period (e.g., > 10 years); 6. the price of the disposal method must allow it to operate economically.

The aforementioned paper defines engineering rejects as any reject that has low solubility in saturated brine, that should not contain appreciable amounts of gasoline or ethylene glycol, that may contain up to 10% by volume of dry residues of more viscous immiscible liquids (chlorinated hydrocarbons, greases, and high molecular weight aromatic hydrocarbons), that should not contain any amount of organic wastes, that may contain inert plastics and resin granules. Furthermore, without excluding other suitable wastes, the aforementioned paper defines as examples of materials suitable for disposal in salt caverns (SCD): inert solids rich in toxic metals; low and intermediate level radioactive wastes; vitrified wastes and slags containing toxic or harmful substances, elements or compounds; cement, gypsum and other construction materials with asbestos fibers; solids and soils contaminated with small amounts of greases and viscous concentrated hydrocarbons; sludge and other process wastes containing heavy metals; spent ceramic catalysts and contaminated reaction beds; other insoluble materials from industrial processes, oil refining, accidental spills, and mineral processing. Such wastes may further contain substantial amounts of water, as this water becomes a saturated brine during the mixing with the granulated salt. The waste may be in the form of large solid particles, such as asbestos cement, in which case it must be ground to meet the specifications required for mixing and injected through the access pipe to the SCD, with the maximum diameter of the solid particles being one-fifth of the inner diameter of the injection pipe to avoid creating blockages during the procedure.

It further clarifies that there are two categories of SCD that can be exploited for repository purposes: 1. caverns specifically designed to meet the toxicity level of wastes; 2. caverns previously created for use as a storage cavity (2a) or for extraction of saturated brine (2b) for industrial purposes. However, it states that, in the latter case, the geometry of the cavern (dimensions and shape) will dictate its use. For example, in case 2a, of SRCs used for hydrocarbon storage, which may have the shape of a "teardrop" or inverted cone, they will have a thick ceiling and floor and will be well spaced from adjacent cavities, and, if the cavern is intact, it can be used as a repository for the entire range of toxic wastes, and, if the cavern has been breached, and the overlying strata have been exposed or the cavern ceiling has collapsed, its use should be limited to the disposal of non-toxic to low-toxicity wastes.

As to the procedure for filling the SCD, the aforementioned paper states that it is done through a pipeline (with a reflux check valve), in which brine is removed from the top of the SRC through the annular exterior of the SRC access shaft to be used in the mixture with the wastes (in granular form with a specific density greater than that of brine, and must not be able to be colloidally suspended in the brine) to be injected into the SRC, as a paste. With this, the waste settles rapidly at the bottom of the SRC, adopting an angle of repose of less than 5 degrees to fill the SRC, even between loose rock blocks within the SRC to eliminate much of the potential for surface subsidence over time.

Accordingly, according to the classification of ABNT NBR 10004, the aforementioned document allows for the storage of hazardous waste (Class I waste) and non-hazardous waste (Class II A waste). And, according to CONAMA (Resolution No. 307/2002), the aforementioned document also mentions the possibility of storing Class B, C, and D C&D waste (asbestos fibers) in caverns in salt rock. This contradicts Resolution 384 of the National Environment Council (CONAMA), from 2004, for example, which stipulates that products containing asbestos as a raw material cannot be disposed of in any location. The recommendation is that asbestos be disposed of along with hazardous wastes in specialized landfills. This also contradicts global environmental standards.

In addition, the aforementioned document presents conceptual errors, for example, the use of a collapsed roof SRC as a repository for low-toxicity wastes does not guarantee long-term isolation of the wastes, nor environmental safety, since through the permeable sediment layers (above the collapsed cavern roof) there will be a flow of the wastes, thus contaminating groundwater, and it may even reach the surface (exudation process) by means of the geological faults or fractures present at the site or generated by the collapse of the SRC roof.

Using intact caverns, previously created for industrial purposes, as a repository for the entire range of toxic wastes does not guarantee the long-term isolation of the wastes or the environmental safety, if the cavern contains non-homogeneous salt layers (intercalations of clay minerals, layers of sediments with high permeability, and other non-evaporitic rocks within the SRC), or if the cavern is close to geological faults and/or fractures (active or not) that are within the radius of influence of the cavern, since through the intercalations or faults (reactivated and open) or fractures, waste flow will occur, thus contaminating groundwater and even generating exudation of the fluids on the floor.

Specifically, as to the abandonment of an SRC with a collapsed roof, it only mentions the procedure of filling the SRC to up to 90% of its dissolved volume (geometric volume of the SRC) with granular materials (with a diameter up to 1/5 of the diameter of the access shaft pipe and an average porosity of approximately 42%); thus, only 37.8% (0.90 x 0.42 = 0.378) of the SRC volume is filled with granular material, with the remaining 62.2% of the SRC volume containing brine. After this, the access shaft to the SRC is cemented. In this way, due to the creep behavior of the salt rock, the SRC will close over time (over years to decades due to inadequate abandonment), compacting the granular material and expelling 62.2% of the brine volume through geological faults, fractures, and permeable materials, thus generating a subsidence basin on the ground floor above the cavern (around the access shaft), damaging equipment, structures, etc., as its effects have already been described in general.

Accordingly, in such scenarios and conditions of abandonment of a SRC with a collapsed roof, the aforementioned document does not maximize the disposal capacity, nor does it guarantee the long-term isolation of wastes or even the environmental safety.

The aforementioned problems are solved by the present invention by means of the methodology of sequentially filling the SRC with granulated material (e.g., Class A C&D waste) with different diameters, from the largest (crushed stone 3, crushed stone 2, crushed stone 1, crushed stone 0) to the smallest (coarse sand, medium sand, fine sand), to form a structural framework, followed by pressurization of the SRC, before plugging the access shaft with cement. With this methodology, a SRC filling volume greater than 95% is obtained (better efficiency), in addition to plugging or colmating the faults (without reactivation and without opening) or fractures or permeable materials with non-contaminating and non-hazardous C&D wastes, thus significantly minimizing or eliminating the subsidence basin generated and not contaminating surface waters or generating exudation (greater effectiveness in solving the problem). It is worth mentioning, for example, that when using Class A C&D wastes, materials that have the characteristic of not decomposing and undergoing any alteration in their composition over time, they do not pollute because they do not alter the soil or the water, given that when in contact with both, no substances are released that harm the environment.

The paper "*Reciclagem de Resíduos Sólidos da Construção Civil do Portal Resíduos Sólidos*" ("Recycling of Solid Wastes from Civil Construction of the Solid Waste Portal") (https://portalresiduossolidos.com) describes how the recycling of solid wastes from construction and demolition waste (C&D waste) works and what types of recycling plants are available for these types of wastes. It also reports that the volumes and weights generated by C&D wastes are astronomical and a large part of this amount has an inadequate final destination.

Specifically, the presented paper refers to the wastes defined by CONAMA Resolution 307 as Class A C&D wastes, in accordance with NR 17 01, defined by the European Waste List, which includes construction, demolition, renovation and repair wastes from paving and other infrastructure works, including soil from earthmoving, construction, demolition, renovation and repair of buildings. The latter three are composed of ceramic elements (bricks, blocks, tiles, cladding panels, etc.) and mortar and concrete, coming from the manufacturing and/or demolition process of precast concrete parts (blocks, pipes, curbs, etc.) produced on the construction sites. After the selective collection, the C&D wastes undergo a trituration process. Thus, the fractions are mixed and the wastes have little added value. Only after the granulation, that is, the separation of the fractions, can a proper destination be given and value added to the new materials (sand, crushed stone, pea gravel, crusher run, and others) resulting from the recycling of the C&D waste. Furthermore, it can also alleviate the pressure on natural resources, as well as contribute to increasing the lifespan of landfills.

The aforementioned paper further describes that the C&D waste recycling plants can be divided into 2 categories, according to their modality: fixed plants and mobile plants. The C&D waste mobile recycling plant (MRP) is basically comprised of three components: a roll on/roll off type truck, a mobile crusher and a mobile rotary screen attached to the truck, the latter two being powered by diesel or electricity. The great advantage of the MRP is that it moves to the location where its service is needed, being versatile, it can increase the profitability, especially by reducing the logistics costs. The C&D waste fixed recycling plant (FRP), on the other hand, has a fixed location, does not have a truck, but has conveyor belts to move the C&D wastes to the crusher and has greater capacity and higher yield. However, it has a higher logistics cost, as it has to receive the C&D wastes and after processing and granulating, they must be transported to the place of use thereof.

Therefore, the aforementioned documents differ from the present invention by not providing procedures for filling, sealing, and abandoning (decommissioning) the SRC in non-homogeneous salt structures, i.e., the SRC in slender salt layers with the presence of clay mineral intercalations (layers of sediments with high permeability within the SRC) and other non-evaporitic rocks, and by not providing procedures for decommissioning SRC near geological faults and/or fractures (active or not) that are within the radius of influence of the SRC. In addition, the vast majority of the documents of the state of the art also do not address to a SRC that has had its roof collapsed.

Thus, given the difficulties present in the aforementioned state of the art, that is, related to the decommissioning of an SRC in a non-homogeneous salt structure (porous and permeable rocks within the SRC) and/or near geological faults and/or an SRC that has had its roof collapsed, the need arose to develop a technique capable of carrying out the filling, sealing and abandonment (decommissioning) of the SRC in an environmentally sound, technically safe and effective and economically viable manner. As reported above, the current state of the art does not possess the unique features that will be presented in detail below.

### SUMMARY OF THE INVENTION

The present invention relates to a method and system for filling, sealing, and abandoning a cavern built in salt rock, especially one located in a non-homogeneous salt structure (with the presence of porous/permeable rock layers within the SRC) and/or near geological faults (active or not) and/or which has experienced a cavern roof collapse, through the use of Class A recycled demolition wastes (C&D waste) (from the civil construction project itself or not) in filling the SRC, which substantially reduces the cost of abandonment/decommissioning, reduces the risks, and reduces the greenhouse gas (GHG) emissions, and, in addition, promotes an environmentally sound disposal of the recycled demolition wastes.

The methodology for filling the SRC occurs sequentially, that is, first with materials of larger granulometry (crushed stone 3, crushed stone 2, crushed stone 1, crushed stone 0) and subsequently with materials of smaller granulometry (coarse sand, medium sand, fine sand), in order to: form a structural framework, colmate the voids and faults/fractures, pressurize and monitor the SRC before filling the access shaft with cement, and conclude the permanent abandonment of the SRC.

As described in the state of the art, it is recommended that the dissolution mining for rock salt extraction occur in a homogeneous salt layer, as the leaching process will form a cavern in the salt rock, where its sealing and abandonment, at the end of its useful life, may occur by abandoning the brine itself in the SRC, with or without the plugging, with cement, of the access shaft to the cavern.

However, in the case of a SRC built in a non-homogeneous salt layer (with the presence of porous/permeable rock layers within the salt), and/or near geological faults, and/or in the condition in which the rock salt production has dissolved the protective slab (roof) of the SRC (rock thickness between the top of the SRC and the rock above the salt layer) and caused the roof of the SRC to collapse, plugging the SRC with air or brine, with or without the cement plugging, is an inappropriate action. Likewise, filling the collapsed roof of the SRC with non-toxic and low-toxicity wastes, hazardous wastes, or any type of C&D waste is inappropriate.

If the state-of-the-art procedure for sealing and abandoning the SRC occurs in a SRC located in a non-homogeneous salt structure (with the presence of porous/permeable rock layers within the salt) and/or near geological faults, during the closure of the SRC, due to the creep process, the pressure in the fluid inside the cavern increases (pressure build-up), causing this fluid to percolate through the non-evaporitic rock layers present in the SRC, due to the high permeability and porosity of the same, and/or through the geological fault. The increase in fluid pressure can also fracture the non-evaporitic rocks and cause the opening or reactivation of geological faults, contaminating the water table and potentially generating fluid exudation on the surface. This can compromise the integrity of the SRC, which can lead to a significant subsidence of the surface floor (formation of a subsidence basin), which is detrimental to any civil/mechanical construction and even to nature, such as, for example, the diversion of river courses and road diversions, and damage to structures. Over time, the closure of the SRC can cause the roof of the SRC to collapse and even create a hole in the surface (sink hole).

In this way, the method and system developed in the present invention make it possible to carry out the filling, sealing and abandonment (decommissioning) of the SRC, by means of the gradual and sequential filling of the SRC, with recycled solid material, with different granulometries, generated through comminution and recycling of Class A construction and demolition wastes (C&D waste), decommissioned from the facilities of the rock salt production or storage project (*in loco*) or other locations.

At the end of the filling of the SRC, it is sealed and abandoned with a cement plug from the last shoe in the access shaft to the SRC down to the floor.

With the illustrated procedure, there is greater filling of the voids, and with the closure of the SRC, the compaction of the filling material in the SRC occurs more quickly (almost immediately) and generates a negligible subsidence of the floor. This procedure also plugs the geological faults and the fluid percolation through the non-evaporitic rock layers present in the SRC facing a non-homogeneous salt rock layer. Thus, problems of stability in the SRC, seismicity, floor subsidence, exudation, and sink hole formation are avoided.

The method described herein aims at replacing the use of (i) pre-fabricated briquettes, which generate higher energy expenditure, incur transportation costs, require a considerable level of compaction (between 15 and 20%) and are not effective in colmating voids and faults (Rolfs et al. 1993: Rock Mechanical Studies on the Post-operational Phase of a Disposal Caverns - 3rd Conference on Mechanical Behavior of Salt, Paliseau, France), or the use of (ii) sand extracted and transported from licensed deposits kilometers away from the SRC, which is associated with a high cost (long execution time and high rate of GHG emissions - greenhouse gases, since 1 truck transports a maximum of 15 m³ and a SRC may require tens of thousands of trips), in addition to a high risk of noise generation and traffic congestion due to the truck circulation (between the collection of sand from a licensed deposit and/or briquettes to the SRC).

In addition, with the present invention, it is possible to avoid the disposal of the Class A civil construction wastes (C&D waste) and of demolition (debris) in landfills, as well as to avoid the problems associated with transporting the wastes from the SRC project to the landfill by truck (thousands of trips).

As such, the present method of filling and abandoning SRC makes it possible to: drastically reduce the total decommissioning costs, reduce the greenhouse gas emissions, reduce the execution time, reduce the noise emissions, reduce the truck traffic, increase the efficiency, increase the safety and reduce the risks (subsidence and traffic accidents), provide an environmentally sound and sustainable destination for the construction and demolition wastes by recycling the same, as well as provide an environmentally sound destination for the SRC brine.

Therefore, the method and system described and claimed in this document present a condition that surpasses the state of the art by causing the filling, sealing, and abandonment processes of the SRC to occur simultaneously and integrated with the decommissioning of the project (civil structure), in an environmentally and technically correct and effective manner, in addition to being economically viable. This allows for better results.

### BRIEF DESCRIPTION OF THE FIGURES

For easier understanding of the invention, Figures 1 to 11, which accompany this specification and are an integral part thereof, are presented by way of illustration, but without intending to limit the invention.
Figures 1a-1e, modified from Crotogino F & Kepplinger J. Cavern well abandonment techniques guidelines manual. SMRI. 2006, schematically illustrate the state of the art of SRC abandonment, but in a homogeneous salt layer. In this sense, the figures illustrate: 1a) definition of a cavern in a homogeneous salt structure (in diapir or thick layer) and a cavern in a non-homogeneous salt structure (in slender layers or with the presence of intercalations and geological faults), as well as a sketch of the area affected by the cavern; 1b) sealing and abandonment of the SRC, in a homogeneous salt layer, at atmospheric pressure, with air and with solid particulate matter; 1c) volume of the SRC over time as a function of the filling material (air or brine) without (I-II-III) and with the sealing of the SRC (IV); 1d) most common method of abandoning SRC in a homogeneous salt layer, using brine without and with solid particulate matter. With the increase in pressure in the fluid inside the SRC, due to the closure of the SRC, the brine is released from the SRC; 1e) sealing and abandonment of the SRC, in a homogeneous salt layer, at atmospheric pressure, with brine, but with perforation in the casing facing a shallow aquifer. With the increase in pressure in the fluid inside the SRC, due to the closure of the SRC, the brine is released from the SRC to the aquifer.
Figures 2a-2f schematically illustrate the state of the art of abandoning a SRC, but in a homogeneous salt layer, regarding the operations necessary to fill a SRC with particulate solid material, with sand extracted from licensed deposits. In this sense, the figures illustrate: 2a) extraction of sand from licensed deposits; 2b) loading of sand onto a truck (15 m³ - 28 ton); 2c) transport of sand by truck to the location of use; 2d) unloading of sand at the location where the cavern to be sealed and abandoned exists; 2e) loading the sand onto a conveyor belt, mixing the sand with water, and injecting the fluidized sand into the cavern access shaft; and 2f) filling the cavern with solid material (sand) while monitoring the pressure, temperature (using a piezometer), and volume filled in the cavern (using sonar).

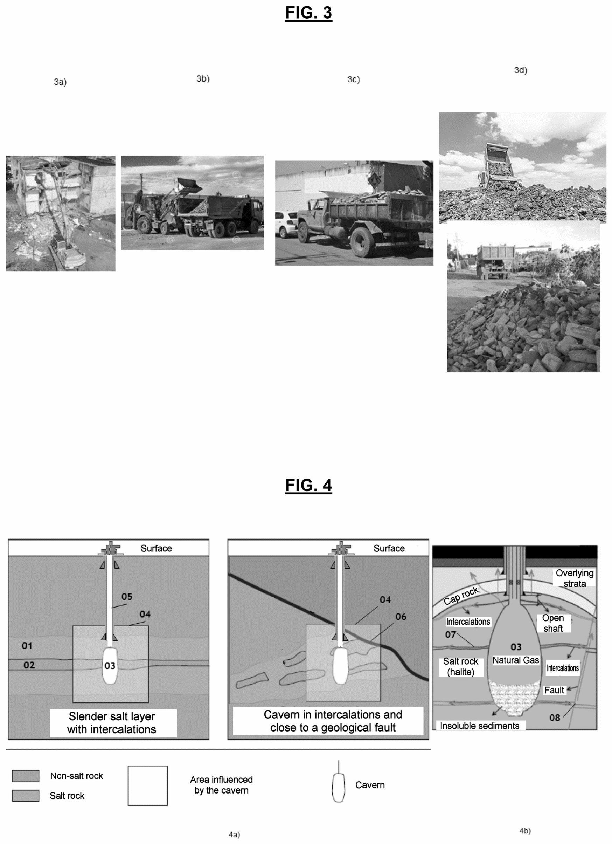

Figures 3a-3d schematically illustrate the state of the art for decommissioning the facilities at the SRC project site (civil infrastructure), in relation to the operations required from demolition to the disposal of debris in a landfill. In this sense, the figures illustrate: 3a) demolition of installed infrastructure or other constructions; 3b) loading onto a truck (15 m³ - 28 ton) of civil construction debris (reject); 3c) transport of debris to an appropriate disposal location; 3d) debris unloaded and truck returning to the site for the next loading.
Figure 4a, modified from Warren, J. K. 2017 (Salt usually seals, but sometimes leaks: Implications for mine and cavern instabilities in the short and long term: Earth-Science Reviews, 2017;165:302-341), schematically illustrates the application scenarios of the present invention, when the SRC is constructed in a non-homogeneous salt layer, i.e., when the SRC contains layers of porous/permeable rocks (non-evaporitic rocks), or when the SRC is located near a geological fault/fracture. Figure 4b, modified from Chen X., et al. 2019 (Study on Sealing Failure of Wellbore in Bedded Salt Cavern Gas Storage. Rock Mechanics and Rock Engineering 2019;52:215-228) schematically illustrates what can occur in a SRC built in the application scenarios of the present invention, if the decommissioning methodology described herein is not carried out. The fluids present in the SRC percolate through the non-evaporitic rock layers (present in the SRC) until they reach a geological fault, and with this the fluids can reach the floor, generating an exudation of fluids on the surface (not illustrated), in addition to contaminating aquifers if present at the location (also not illustrated).

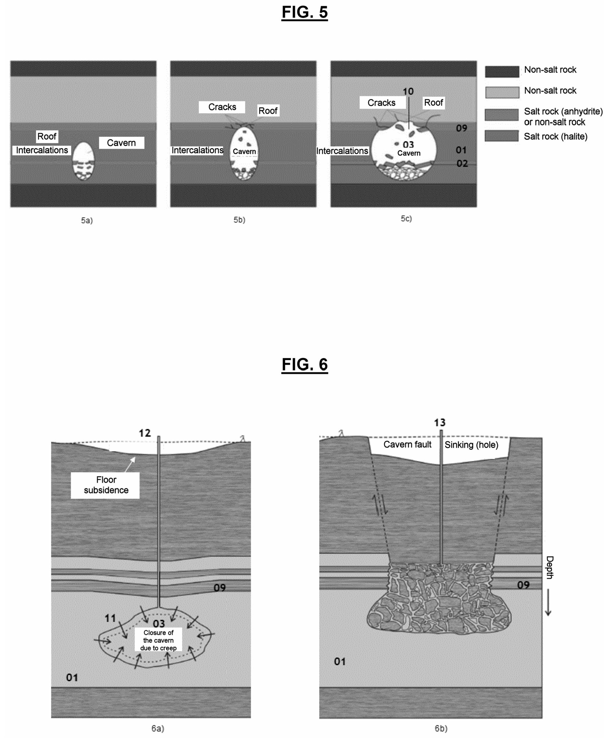

Figures 5a-5c, modified from Zhang Z, et al. 2019 (Study on the mechanism of roof collapse and leakage of horizontal cavern in thinly bedded salt rocks. Environmental Earth Sciences, 2019;78:292) schematically illustrate another application scenario of the present invention, when the roof of the SRC collapses, causing the cavern to contain a greater presence of exposed non-salt rocks.
Figure 6a, modified from Berést et al. 2019 (Review and analysis of historical leakages from storage salt caverns wells. Oil & Gas Science and Technology - Rev. IFP Energies Nouvelles, 2019;74,27), schematically illustrates what the application of the present invention prevents, that is, a subsidence of the floor above the SRC (due to the excessive closure of the SRC). In turn, Figure 6b shows the formation of a sink hole (surface sinking, crater formation) due to a collapse of the roof of the SRC and the formations above the SRC.

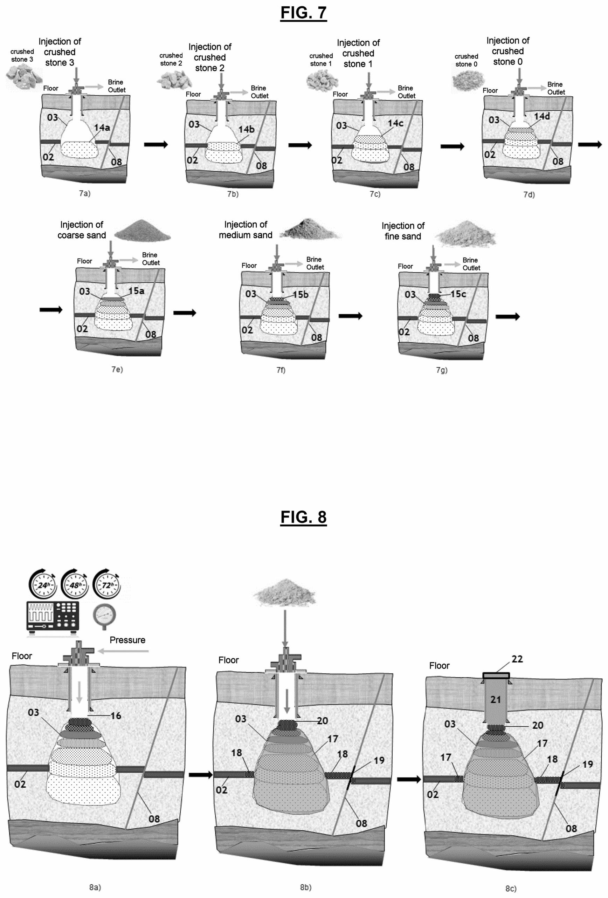

Figures 7a-7g schematically illustrate a detailed description of the first step of the methodology of the present invention, where a methodology for filling the SRC is presented, in which particulate solids with determined volumes and sizes are inserted sequentially: 7a) insert crushed stone 3 (14a) (25 < MCD < 50 mm) from 30 to 40% of the GVC; 7b) insert crushed stone 2 (14b) (19 < MCD < 25 mm) from 15 to 25% of the GVC; 7c) insert crushed stone 1 (14c) (9.5 < MCD < 19 mm) from 10 to 15% of the GVC; 7d) insert crushed stone 0 (14d) (4.8 < MCD < 9.5 mm) from 5 to 10% of the GVC; 7e) insert coarse sand (15a) (2.0 < MCD < 4.8 mm) from 5 to 25% of the GVC; 7f) insert medium sand (15b) (0.42 < MCD < 2.0 mm) from 3 to 10% of the GVC; and 7g) insert fine sand (15c) (0.07 < MCD < 0.42 mm) from 2 to 5% of the GVC.
Figures 8a-8c schematically illustrate the second step of the methodology of the present invention, where the following occurs: 8a) pressurization of the SRC, monitoring the pressure, temperature and fluid level in the SRC; 8b) reinjection of fine sand until the access shaft is complete, monitoring the pressure, temperature and fluid level in the SRC; and 8c) injection of cement paste until the access shaft to the SRC is filled to complete the permanent abandonment of the SRC.

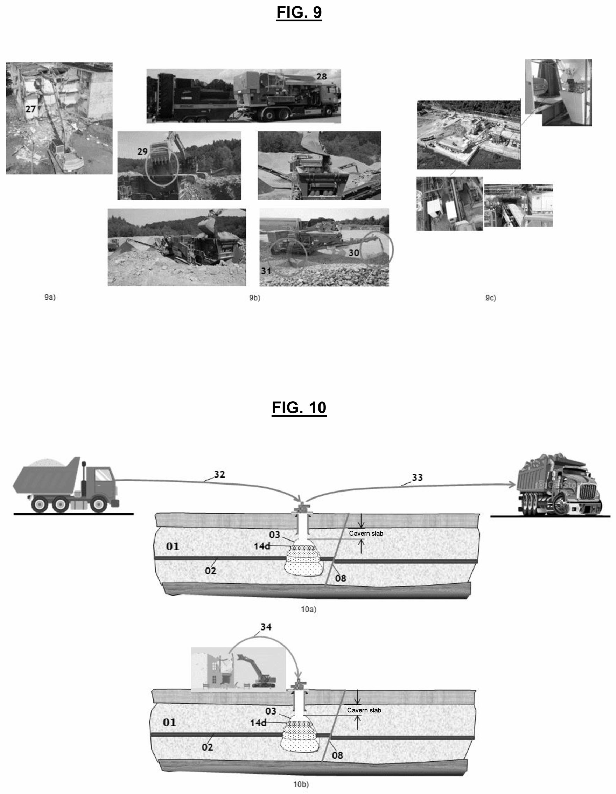

Figures 9a-9c schematically illustrate the production and use of Class A demolition C&D waste as raw material in filling the SRC. In this sense, the figures illustrate: 9a) demolition of installed infrastructure or other constructions; 9b) insertion of the demolition material by excavator (29), for example, into a mobile recycling plant of civil construction wastes, which plant consists of a roll on/roll off type truck (28), a mobile crusher (impact or jaw) and a mobile rotary screen attached to the truck. The comminution or trituration of the waste, which is the fragmentation of the waste by crushing (coarse fragmentation) and grinding (fine fragmentation), followed by granulation (screen classification), is carried out to produce crushed stone (30 - blue circle) and to produce sand (31 - yellow circle) and/or separated by an electromagnet, which separates the ferromagnetic material; and 9c) loading of the crushed stone and/or sand onto a conveyor belt, mixing of the crushed stone or sand with water, and injection of the fluidized crushed stone and/or sand into the access shaft to the cavern.
Figures 10a-10b illustrate, schematically and respectively, a summary of the distances traveled, in the state of the art versus in the present invention, in the decommissioning of an SRC. In this sense, Figure 10a illustrates the state of the art in which the transport by truck (of up to 15 m³ each) of sand from the licensed deposit of extraction to the location of the SRC to be abandoned (for up to tens of kilometers with thousands of truck trips), and the transport by truck (of up to 15 m³ each) of demolition wastes from the SRC facility to a licensed landfill (for up to tens of kilometers with thousands of truck trips). In turn, Figure 10b illustrates the present invention, with the filling of the SRC with recycled solid material *in loco* from Class A demolition waste (C&D waste) from the location of the SRC project and/or civil structure affected by the SRC, due to the formation of a subsidence basin and condemned to demolition. In this way, the present invention avoids the displacement of thousands of trucks with sand and waste for dozens of kilometers.

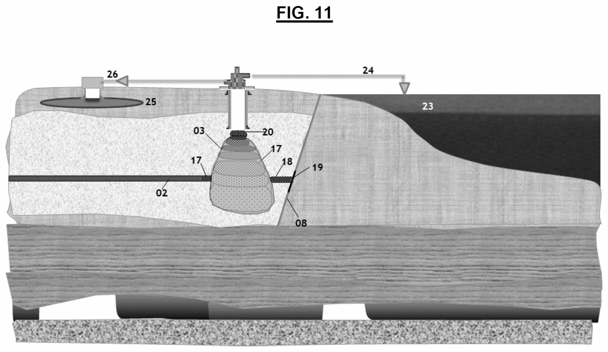

Figure 11 schematically illustrates ways of disposing of the brine, in technically and economically correct ways, replaced in the SRC, due to the filling of the SRC with crushed stone and sand (as shown in Figures 7a-7g and 8a-8c).

### OBJECTIVE OF THE INVENTION

The present invention aims at providing a method for filling, sealing, and abandoning (decommissioning) a cavern built in salt rock (SRC) located in a non-homogeneous salt structure (with the presence of porous/permeable layers within the SRC) and/or near geological faults and/or that has suffered a cavern roof collapse. In a preferred embodiment, said method applies to a cavern built in salt rock (SRC), especially located in a non-homogeneous salt structure (with the presence of porous/permeable rock layers within the salt layer) and/or near geological faults or that has suffered a cavern roof (slab) collapse, which can occur simultaneously and integrated with the decommissioning of the facilities at the SRC project site or of a civil structure affected by the SRC (due to the formation of a subsidence basin) and condemned to demolition or another area. Such an embodiment utilizes the recycled aggregates from Class A construction and demolition waste (C&D waste) from the project facility itself containing the SRC (*in loco*) or from another civil construction affected by the SRC or other nearby condemned areas designated for demolition.

A second objective of the present invention is to provide a system to enable the filling, sealing and abandonment of a cavern built in salt rock (SRC) located in a non-homogeneous salt structure (with the presence of porous/permeable layers within the SRC) and/or near geological faults and/or that has had a cavern roof collapse.

### DETAILED DESCRIPTION OF THE INVENTION

The present invention relates to a method and a system for filling, sealing and abandoning (decommissioning) a cavern built in salt rock (SRC), especially located in a non-homogeneous salt structure (with the presence of porous/permeable rock layers within the salt layer) and/or near geological faults and/or where the cavern roof (slab) has collapsed, which can occur simultaneously and integrated with the decommissioning of the facilities at the SRC project site and/or of civil structure affected by the SRC (due to the formation of a subsidence basin) and condemned to demolition or another area. More particularly, in the decommissioning of rock salt production and/or storage project in which the cavern in salt rock (SRC), built by the dissolution mining process, requires filling the SRC with solid material.

The invention can be described by means of the following reference numerals:
01 - Layer of evaporitic rock or salt rock;
02 - Layer of non-salt rock (porous/permeable rock) between layers of salt rocks;
03 - Cavern in salt rock (SRC);
04 - Area of influence of the SRC;
05 - Access shaft to the SRC;
06 - Geological fault present near the SRC;
07 - Percolation of fluids from the SRC in a layer of non-salt rock present in the SRC;
08 - Percolation of fluids from the SRC through a geological fault near the SRC;
09 - Layer of non-salt rock (porous/permeable rock) above the SRC;
10 - Roof collapse of the SRC;
11 - Closure of the SRC;
12 - Formation of a subsidence basin in the ground floor above the SRC;
13 - Occurrence of a sink hole in the ground floor;
14a - Insertion of crushed stone 3 in the SRC;
14b - Insertion of crushed stone 2 in the SRC;
14c - Insertion of crushed stone 1 in the SRC;
14d - Insertion of crushed stone 0 in the SRC;
15a - Insertion of coarse sand in the SRC;
15b - Insertion of medium sand in the SRC;
15c - Insertion of fine sand in the SRC;
16 - Lowering of the SRC filling level due to the application of pressure that causes the displacement of the filling materials;
17 - Flow of the smaller particles (15c) filling the empty volumes in the SRC (03);
18 - Percolation followed by plugging of the non-evaporitic rock layers (02) present in the SRC (03);
19 - Percolation followed by plugging of the geological fault (08) present near the SRC (03).
20 - Addition of fine sand (15c) to the SRC (1) to complete the displaced volume (16);
21 - Filling of the access shaft to SRC (03) with cement paste from the last shoe in the access shaft to the floor;
22 - Completion of the permanent abandonment of the SRC;
23 - Sea;
24 - Saltwater discharge hose into the sea;
25 - Shallow saltwater aquifer near the location of the access shaft to the SRC;
26 - Saltwater discharge hose into a saltwater aquifer via shallow well.
27 - Demolition of the civil construction;
28 - Mobile recycling plant for construction and demolition waste, for example, which consists of a roll on/roll off type truck, a mobile crusher (impact or jaw) and a mobile rotary screen attached to the truck;
29 - Excavator placing demolition material into the crusher of the mobile recycling plant;
30 - Crushed stone thrown by the conveyor belt after demolition material passes through crushing and screening;
31 - Sand thrown by the conveyor belt after demolition material passes through crushing and screening;
32 - Transport by truck (up to 15 m³) of sand from the licensed extraction site to the location of the SRC to be abandoned, for tens of kilometers over thousands of trips (state of the art);
33 - Transport by truck (up to 15 m³) of demolition waste from the SRC facility to a licensed landfill, for tens of kilometers over thousands of trips (state of the art);
34 - Filling the SRC with recycled solid material from demolition waste *in loco*, as described in the present invention, i.e., without the need for trucks traveling tens of kilometers over thousands of trips.

The method of the present invention can be applied when the SRC is built in a non-homogeneous salt layer (Figure 4a), i.e., when the SRC contains layers of porous/permeable rocks (non-evaporitic rocks), the SRC is located near a geological fault/fracture or when the roof of the SRC collapses (Figures 5a-5c), which causes the cavern to contain a greater presence of exposed non-salt rocks.

If the decommissioning methodology described by the present invention is not carried out, the SRC is subject to the scenarios shown in Figures 4b, 5, and 6. The fluids present in the SRC percolate through the non-evaporitic rock layers (present in the SRC) until they reach a geological fault, percolate through the same and thus the fluids can reach the floor, generating a fluid exudation (not shown), in addition to contaminating aquifers if present at the location (not shown). Or it can collapse the roof of the SRC and cause a subsidence of the floor followed by the formation of a sink hole (surface floor sinking, crater formation).

Thus, the method of the present invention also aims at preventing a subsidence of the floor above the SRC (due to excessive closure of the SRC), as well as the formation of a sink hole (due to a collapse of the SRC roof and the formations above the SRC) (Figures 6a and 6b).

Below, there follows a detailed description of a preferred embodiment of the present invention (Example 1), a partial embodiment of the present invention (Example 2), and a comparative embodiment of the present invention with the state of the art (Example 3), of an illustrative nature and in no way limiting. Nevertheless, it will be clear to a technician skilled on the subject, from reading this description, possible additional embodiments of the present invention still encompassed by the essential and optional features below.

### Example 1 - Preferred embodiment of the present invention

Figures 7a-7g show a SRC (03) constructed in one of the application scenarios of the present invention, in a non-homogeneous salt layer, i.e., the SRC contains the presence of porous/permeable rock layers (non-evaporitic rocks) (02) and is located close to a geological fault/fracture (08).

First, the SRC (03) is filled with crushed stone, processed or industrialized, from Class A C&D waste, between 60% and 90% of the geometric volume of the cavern (GVC), fluidized with the brine present in the SRC. The filling of the SRC (03) begins with crushed stone 3 (14a), with a maximum characteristic dimension (MCD) between 25 and 50 mm (30 to 40% of the GVC); next, with crushed stone 2 (14b), with MCD between 19 and 25 mm (15 to 25% of the GVC); then, with crushed stone 1 (14c), with MCD between 9.5 and 19 mm (10 to 15% of the GVC); then, with crushed stone 0 (14d) (pea gravel) with MCD between 4.8 and 9.5 mm (5 to 10% of the GVC).

In the next step, the filling of the SRC (03) begins with sand, milled or industrialized (from Class A C&D waste), fluidized with the brine present in the SRC, between 40 and 10% of the GVC. It begins with coarse sand (15a), with MCD between 2.0 and 4.8 mm (5 to 25% of the GVC); next, with medium sand (15b), with MCD between 0.42 and 2.00 mm (3 to 10% of the GVC); and finally with fine sand (15c), with MCD between 0.07 and 0.42 mm (2 to 5% of the GVC).

Such a procedure forms a framework within the SRC, enabling greater structural capacity, greater filling capacity and better conditions to (i) colmate the flow in the porous/permeable rock layers (02) present in the SRC or on its collapsed or non-collapsed top, and (ii) to colmate the flow in faults (08).

After filling the SRC (03) with crushed stone and sand, the SRC (03) must be pressurized, between 50% and 90% of the previously calculated burial gradient or fracture gradient, to assist the smaller particles to flow and fill the void volumes (17), colmating (18, 19) the flow in the pores of the porous/permeable layers (02) and in the faults (08), during a period of 24 to 72 h, monitoring the pressure, temperature and fluid level in the SRC (with pressure transducers, temperature sensors and sonar inside the SRC access shaft).

After the pressurization, fine sand (20) must be added to the SRC to complete the displaced volume (16). At the end of this period, the SRC access shaft must be filled with cement paste (21), thus concluding the permanent abandonment of the SRC (22).

The particulate solid material (crushed stone and sand) used to fill the SRC can be natural crushed stone and sand (washed or extracted from deposits), but preferably it should be processed or industrialized from the recycling of Class A construction and demolition waste (C&D waste), from the civil construction project itself or not (from other areas condemned to demolition), obtained through comminution (grinding and trituration) followed by granulation, by a fixed or mobile recycling plant. The processed or industrialized crushed stone and sand have the same physical characteristics and granulations as natural crushed stone and sand (washed or extracted from deposits), with the only difference being that it may contain cement particles.

Specifically, when filling the SRC with recycled solid material of different granulometries, generated through the comminution of the construction and demolition waste (C&D waste), it must be Class A, according to CONAMA Resolution No. 307/02, which establishes guidelines, criteria and procedures for the management of the construction and demolition waste (amended by Resolutions 348, of August 16, 2004, and No. 431, of May 24, 2011, of the National Environment Council - CONAMA).

The Class A C&D wastes can preferably come from the civil construction project itself (*in loco*) for rock salt production or from storage in the SRC, if the latter is being decommissioned along with the SRC, or from other areas. This results in a substantial reduction in the decommissioning costs and greenhouse gas (GHG) emissions.

The Class A C&D wastes, according to CONAMA, correspond to C&D wastes defined by the European Waste List (EWL), namely: concrete, bricks, tiles, roof tiles and ceramic materials.

### Example 2 - Partial embodiment of the present invention

In a partial embodiment of the invention, it applies to the demolition (Figure 9a) of the civil construction infrastructure installed in the SRC project (27) or other nearby constructions affected by the SRC, and condemned to demolition (27).

After the demolition (Figure 9b), the demolition material is inserted by the excavator (29), for example, into a construction and demolition waste mobile recycling plant, which consists of a roll on/roll off type truck (28), a mobile crusher (impact or jaw) and a mobile rotary screen attached to the truck. The comminution or trituration of the wastes, which is the fragmentation of the waste by crushing (coarse fragmentation) and grinding (fine fragmentation), followed by granulation (screen classification), is carried out to produce crushed stone (30 - blue circle) and produce sand (31 - yellow circle) and/or separated by an electromagnet, which separates the ferromagnetic material.

Alternatively, the processed crushed stone and sand can come from a fixed C&D recycling plant (not shown), and be transported to the SRC decommissioning site.

Furthermore, the crushed stone and sand can alternatively be processed or industrialized from other areas of civil construction demolition (outside of the rock salt processing facilities) and/or from Class A C&D waste landfill.

Next, the processed crushed stone or sand is loaded onto a conveyor belt (Figure 9c), the crushed stone or sand is mixed with water (from the SRC itself, i.e., brine) in a mixing vessel, and finally, the fluidized crushed stone and/or sand is/are injected into the cavern access shaft, individually, at a flow rate lower than the fracture gradient of the shoe at the top of the SRC or permeable porous layers.

### Example 3 - Comparative embodiment between the present invention and the state of the art in relation to truck transport

A summary of the distances traveled by the state of the art (32) and (33) and by the present invention (34), for the decommissioning of the SRC (03) in a non-homogeneous salt layer (02) and close to the fault (08) can be visualized by Figures 10a-10c.

In the state of the art, for example, in filling the SRC with sand from a licensed deposit, it occurs with the transport by truck (of up to 15 m³) of the sand extracted from the licensed deposit to the location of the SRC to be abandoned/decommissioned, on the order of tens of kilometers (32) over thousands of trips. Using an average SRC as a reference, with a volume of approximately 300,000 m³, 20,000 round trips would be required, which would directly lead to an increase in traffic and greenhouse gas (GHG) emissions, in addition to increased costs for truck rental, driver and diesel, and risks due to an increased exposure.

Furthermore, still in the state of the art, the disposal of the construction and demolition wastes (C&D wastes) from the infrastructure of the project facilities (*in loco*) for rock salt production or SRC storage occurs through truck transport (up to 15 m³) of the demolition waste from the SRC facility to a licensed landfill (33), on the order of tens of kilometers, through thousands of trips. This would also result in thousands of round trips, which would directly lead to an increase in traffic and greenhouse gas (GHG) emissions, as well as increased costs for truck rental, driver and diesel, and risks due to the increased exposure.

By the method of the present invention, filling the SRC with particulate solid material (Figure 7), first crushed stone (14a-14d) and then sand (15a-15c), can preferably be done with the recycling of demolition waste from the civil construction installed *in loco* (27), which operated the SRC (Figures 9a-9c and 10a-10c). This results in an exceptional reduction in the decommissioning costs, minimizes greenhouse gas (GHG) emissions, avoids increased vehicle traffic, reduces the risk of traffic accidents, given the shorter distance (34) between obtaining the raw material (27) and the SRC (03), in addition to minimizing the amount of C&D waste to be disposed of (class non-A).

Alternatively, depending on the dimensions and quantity of C&D waste to be decommissioned, the crushed stone and sand can come from the recycling of construction and demolition wastes (C&D wastes) from another area, outside the rock salt processing facilities, and even from a civil construction reject landfill (not illustrated).

Additionally, oil well drilling waste (within national specifications) can be disposed of in the SRC filling process, between the injection of crushed stone and sand (not illustrated).

During the filling of the SRC (03) with crushed stone (14a-14d) or sand (15a-15c), the brine present in the cavern is drained out of the SRC, in which it can be processed (tank, filters) to become potable water, and the rock salt extracted from the brine can be used (not illustrated), as visualized by Figure 11. Further, in the case of the SRC near the sea (23), the brine from the SRC can be discharged into the sea via a hose or brine pipeline (24), within the environmental specifications (concentration and temperature). Further, in the case of a shallow saltwater aquifer, near (25) the location of the access shaft to SRC (03), the brine can be discharged into a shallow well (26) built for this purpose and then abandoned. These concepts are not mentioned in the state of the art, which only mentions that the brine is released from the SRC.

Accordingly, in the case of a SRC located in a non-homogeneous salt structure, or near geological faults, or with a collapsed roof, the present invention prevents a fluid percolation through the non-evaporitic rock layers present in the SRC and in the geological faults. This avoids stability problems in the SRC, seismicity, floor subsidence, and sink hole formation.

Thus, after filling, sealing, and abandoning the SRC, subsidence and inclinometry measuring instruments are installed on the floor, around the SRC, to monitor the measurements for 2 years, or as specified by the relevant legislation.

With the procedure illustrated in Examples 1 to 3, there is greater filling of the voids, and with the closure of the SRC, the compaction of the filling material in the SRC occurs more quickly (almost immediately) and generates s negligible floor subsidence.

Furthermore, with the methodology of the present invention, the filling of the SRC is ensured with a larger filled volume (lower void ratio), with the blocking of flow by the faults and porous/permeable layers, preventing the opening/propagation of faults, as well as minimizing the subsidence of the ground floor. With this, the volume of discarded C&D waste is maximized, the isolation of the SRC is ensured in the long term, and the environmental, civil and property safety around the SRC is guaranteed.

In addition, the present invention is environmentally sound and sustainable; it has a lower emission of greenhouse gases (GHG), i.e., a smaller carbon footprint; it causes less environmental impact; it has a lower overall cost, by using Class A C&D waste, instead of using crushed stone or washed sand extracted from deposits or riverbeds, and transported tens of kilometers over thousands of truck trips emitting greenhouse gases and congesting traffic.

It is worth emphasizing that the method described herein perfectly complies with the provisions of Article 9 of Law 12.305/2010, which states: "In the management and handling of solid waste, the following order of priority must be observed: non-generation, reduction, reuse, recycling, treatment of solid waste and environmentally sound final disposal of the rejects." (National Solid Waste Policy - PNRS).

The present invention further provides a system to enable the filling, sealing and abandonment of a cavern built in salt rock (SRC) located in a non-homogeneous salt structure (with the presence of porous/permeable layers within the SRC) and/or near geological faults and/or that has had a cavern roof collapse, which is comprised of:
equipment for demolition of the installed infrastructure or other constructions;
excavator;
mobile recycling plant for construction waste, consisting of a roll on/roll off type truck, a mobile crusher and a mobile rotary screen attached to the truck;
conveyor belt for loading crushed stone or sand;
mixer for crushed stone or sand with water;
pressure, flow, temperature and volume gauges filled in the cavern (sonar);
pumps to pressurize the SRC; and
system for preparing and injecting cement paste to fill the access shaft to the SRC to complete the permanent abandonment of the SRC.

The description given so far of the present method and system, as well as their embodiments, should be understood as not limiting the invention, which is limited only to the scope of the following claims.

## Claims

1. A method for filling, sealing and abandoning (decommissioning) a cavern **characterized in that** it is applied to a cavern built in salt rock (SRC), especially located in a non-homogeneous salt structure, close to geological faults or that has had a cavern roof collapse, preferably comprising the following steps:
a) demolition of the civil construction infrastructure installed in the SRC project (27) or other nearby constructions, affected by the SRC and condemned to demolition (27);
b) insertion of the demolition material by excavator (29) into a mobile recycling plant for construction and demolition waste (C&D waste) (28), for the comminution of the Class A Construction and Demolition Waste (C&D waste) to obtain crushed stone (30) or sand (31), processed or industrialized, with different granulometries;
c) loading of crushed stone (30) or sand (31) onto a conveyor belt, mixing with water in a mixing vessel and injection of the fluidized crushed stone or sand into the cavern access shaft, individually;
d) sequential filling of the cavern with particulate solid material, i.e., first with materials of larger granulometry (crushed stone 3, crushed stone 2, crushed stone 1, crushed stone 0) and subsequently with the material of smaller granulometry (coarse sand, medium sand, fine sand), to form a structural framework within the SRC;
e) pressurization of the cavern and monitoring of the variables (temperature, volume, pressure) for a period of 24 to 72 h;
f) completion of the displaced volume in the cavern to the non-salt rocks and to the faults, by adding fine sand (20) to the SRC to complete the displaced volume (16); and
g) filling the access shaft to the SRC with cement paste (21), thus concluding the permanent abandonment of the SRC (22).

2. The method according to claim 1, **characterized in that** the C&D waste mobile recycling plant is powered by electricity or a diesel engine; is comprised of a roll on/roll off type truck (28), a mobile crusher (impact or jaw), and a mobile rotary screen, both attached to the truck.

3. The method according to claim 1, **characterized in that** the filling of the SRC (03):
a) starts with crushed stone 3 (14a), with a maximum characteristic dimension (MCD) between 25 and 50 mm (30 to 40% of the Geometric Volume of the Cavern - GVC); then with crushed stone 2 (14b), with an MCD between 19 and 25 mm (15 to 25% of the GVC); then with crushed stone 1 (14c), with an MCD between 9.5 and 19 mm (10 to 15% of the GVC); and with crushed stone 0 (14d) (pea gravel) with an MCD between 4.8 and 9.5 mm (5 to 10% of the GVC);
b) starts with coarse sand (15a), with an MCD between 2.0 and 4.8 mm (5 to 25% of the GVC); next, use medium sand (15b), with MCD between 0.42 and 2.00 mm (3 to 10% of the GVC); and fine sand (15c) with MCD between 0.07 and 0.42 mm (2 to 5% of the GVC);
c) pressurizes the SRC (03), between 50% and 90% of the previously calculated burial gradient or fracture gradient, to assist the smaller particles to flow and fill the voids (17), colmating (18, 19) the flow in the pores of the porous/permeable layers (02) and in the faults (08);
d) during a period of 24 to 72 hours, the pressure, temperature and fluid level in the SRC are to be monitored (with pressure transducers, temperature sensors and sonar inside the SRC access shaft);
e) replenishes the displaced volume in the cavern to the non-salt rocks and to the faults, by adding fine sand (20) to the SRC to replenish the displaced volume (16).

4. The method according to claim 1, **characterized in that** the crushed stone and sand can alternatively be processed or industrialized from other areas of civil construction demolition (outside of the rock salt processing facilities) and/or from Class A C&D waste landfill.

5. The method according to claim 3, **characterized in that** the crushed stone used in filling the SRC (03) is processed or industrialized from the Class A civil construction demolition waste (C&D waste), fluidized with the brine present in the SRC, comprising between 60% and 90% of the GVC.

6. The method according to claim 3, **characterized in that** the sand used in filling the SRC (03) is processed or industrialized from Class A civil construction demolition waste (C&D waste), fluidized with the brine present in the SRC, comprising between 40% and 10% of the GVC.

7. The method according to claim 1 or 3, **characterized in that**, in step (d), there is obtained a filling volume of the SRC greater than 95%, in addition to plugging or colmating the faults, fractures or permeable materials with non-contaminating and non-hazardous C&D waste, minimizing the generated subsidence basin, avoiding the contamination of the surface waters and the generation of exudation.

8. The method according to claim 1 or 4 to 6, **characterized in that** the crushed stone or sand is produced:
- preferably, via comminution or trituration processes (crushing, grinding and granulation) of the civil construction demolition waste (C&D waste), *in loco*, of the project in which the SRC is located; and
- alternatively, via comminution or trituration processes (crushing, grinding and granulation) from the recycling of civil construction and demolition waste (C&D waste) from another area, outside the rock salt processing facilities, and even from civil construction waste landfills, or even extracted from deposits.

9. The method according to claim 1 or 3, **characterized in that**, additionally, oil well drilling waste (within national specifications) can be discarded into the SRC filling process, between the injection of crushed stone and sand.

10. The method according to claim 1 or 3, **characterized in that** the brine, which is drained out of the SRC, is processed in tanks or filters to become potable water or is discharged into a shallow saltwater aquifer or the sea.

11. The method according to claim 1, **characterized in that** the access shaft to the cavern is sealed and definitively abandoned (step g), with cement plugs from the last casing shoe to the floor.

12. A system for filling, sealing and abandoning (decommissioning) a cavern, **characterized in that** it is applied to a cavern built in salt rock (SRC), especially located in a non-homogeneous salt structure, close to geological faults or that has had a cavern roof collapse, comprising:
(i) equipment for demolition of the installed infrastructure or other constructions (27);
(ii) excavator (29) for inserting the demolition material into the civil construction waste mobile recycling plant (28);
(iii) civil construction waste mobile recycling plant (28), composed of at least one roll on/roll off type truck, a mobile crusher and a mobile rotary screen attached to the truck;
(iv) conveyor belt for loading crushed stone (30) or sand (31);
(v) crushed stone or sand mixer with water;
(vi) pressure, flow rate, temperature and filled volume gauges for the cavern (sonar);
(vii) pumps to pressurize the SRC;
(viii) system to prepare and inject cement paste up to fill the access shaft to the SRC to complete the permanent abandonment of the SRC.

13. The system according to claim 12, **characterized in that** the recycling plant is able to obtain waste, such as crushed stone and sand, with the following dimensions:
a) crushed stone 3 (14a), with maximum characteristic dimension (MCD) between 25 and 50 mm (comprising 30 to 40% of the GVC);
b) crushed stone 2 (14b), with MCD between 19 and 25 mm (comprising 15 to 25% of the GVC);
c) crushed stone 1 (14c), with MCD between 9.5 and 19 mm (comprising 10 to 15% of the GVC);
d) crushed stone 0 (14d) (pea gravel) with MCD between 4.8 and 9.5 mm (comprising 5 to 10% of the GVC);
e) coarse sand (15a), with MCD between 2.0 and 4.8 mm (comprising 5 to 25% of the GVC);
f) medium sand (15b), with MCD between 0.42 and 2.00 mm (comprising 3 to 10% of the GVC); and
g) fine sand (15c) with MCD between 0.07 and 0.42 mm (comprising 2 to 5% of the GVC).

14. The system according to claim 12 or 13, **characterized in that** the larger granulometry waste (crushed stone) is inserted at the bottom of the SRC and the smaller granulometry waste (sand) is inserted at the end of the SRC filling to colmate the voids and faults.

15. The system according to any of claims 12 to 14, **characterized in that** it replenishes the displaced volume in the cavern, after the pressurization and monitoring period, with the addition of fine sand (20) to the SRC and finally filling the access shaft to the SRC with cement paste (21), thus concluding the permanent abandonment of the SRC (22).
